# EUROPEAN PATENT APPLICATION

(11) **EP 3 024 228 A2**
(43) Date of publication of application: **25.05.2016**
(21) Application number: 15193249.8
(22) Date of filing: 05.11.2015
(51) Int. Cl.: H04N 9/31

(54) **IMAGE PROJECTION APPARATUS, AND IMAGE PROJECTION METHOD, AND IMAGE DISPLAY APPARATUS**

(30) Priority: 20.11.2014 JP 2014235425
(71) Applicant: Ricoh Company, Ltd., Tokyo 143-8555 (JP)
(72) Inventor: MAEDA, Mitomo, Ohta-ku, Tokyo 143-8555 (JP)
(74) Representative: Leeming, John Gerard

(57) **Abstract**

An image projection apparatus (1) includes an on-screen display (OSD) processing unit (23) to generate an OSD image, one or more image signal receivers (30a-30e) to receive a first image signal and a second image signal one or more external apparatuses, an image signal processing unit (22) to generate a first image from the first image signal and a second image from the second image signal, to perform masking partially to the first image to set a display portion of the OSD image on the first image, and to perform scaling to the second image to match with the display portion of the OSD image, the second image processed with the scaling to be virtually superimposed on the first image processed with the masking, and an image projection unit (26) to sequentially display the first image processed with the masking and the second image processed with the scaling with a display ratio set for the first image and the second image.

## Description

### BACKGROUND

### Technical Field

The present invention relates to an image projection apparatus, an image projection method, and an image display apparatus.

### Background art

Image projection apparatuses known as projectors have been widely used with the advancement of higher resolution of liquid crystal panels, enhancement of brightness of lamps due to higher efficiency, and lower price. Further, light-weight and compact image projection apparatuses using digital micro-mirror devices (DMD) as an image generation element have been widely used in offices, schools, and homes.

Typically, an image projection apparatus receives image data from an externally connected apparatus such as personal computers (image supply apparatus), and projects a projection image on a screen used as a projection face. Further, the image projection apparatus has an on-screen-display (OSD) capability that can project a menu image on the screen in addition to the projection image, in which the menu image is used to instruct or request various operations and settings to the image projection apparatus.

Further, conventional image displaying methods can utilize a picture-in-picture (PIP) capability that can display a secondary image as a small screen image generated from a second input signal on a partial area of a primary image generated from a first input signal. The picture-in-picture (PIP) is typically used to display a movie image transmitted from a television or web-camera on a screen of a personal computer, and a movie image of one channel on a movie image of another channel on a television monitor, and the picture-in-picture (PIP) is also applied to image projection apparatuses recently. The first input signal and the second input signal may be supplied from different image supply apparatuses or the same image supply apparatus.

The picture-in-picture (PIP) requires a memory to store secondary image data used for displaying the secondary image. For example, the secondary image data used for displaying the secondary image is compressed and stored in the memory. Since the secondary image data is generated from the second input signal, and then stored in the memory until the secondary image data is displayed as the secondary image at a partial area on the primary image, the memory requires enough storage capacity to store the secondary image data. Therefore, conventional picture-in-picture (PIP) requires the memory that can store the secondary image data for one frame.

WO-9733429-A1 discloses a configuration to reduce storage capacity of a memory, in which a second input signal is sub-sampled, and only one field of the sub-sampled second image data is stored in the memory. Specifically, a five-points sub-sampling method is employed to enhance the detected horizontal resolution of the sub-sampled second image data.

Typically, the conventional picture-in-picture (PIP) require the primary image data generated from the first input signal, a memory for storing the secondary image data generated from the second input signal, and a memory for storing synthesis data generated from the primary image data and the secondary image data. Therefore, the conventional picture-in-picture (PIP) relatively require greater memory capacities, which increases the cost of the system.

### SUMMARY

In one aspect of the present invention, an image projection apparatus is devised. The image projection apparatus includes an on-screen display (OSD) processing unit to generate an OSD image, one or more image signal receivers to receive a first image signal and a second image signal from one or more external apparatuses, an image signal processing unit to generate a first image from the first image signal and a second image from the second image signal, to perform masking partially to the first image to set a display portion of the OSD image on the first image, and to perform scaling to the second image to match with the display portion of the OSD image, the second image processed with the scaling to be virtually superimposed on the first image processed with the masking, and an image projection unit to sequentially display the first image processed with the masking and the second image processed with the scaling with a display ratio set for the first image and the second image.

In another aspect of the present invention, a method of projecting an image includes the steps of generating an on-screen display (OSD) image; generating a first image from a first image signal and a second image from a second image signal; performing masking partially to the first image to set a display portion of the OSD image on the first image; performing scaling to the second image to match with the display portion of the OSD image, the second image processed with the scaling to be virtually superimposed on the first image processed with the masking; and displaying the first image processed with the masking and the second image processed with the scaling sequentially with a display ratio set for the first image and the second image.

In another aspect of the present invention, an image display apparatus is devised. The image display apparatus s includes an on-screen display (OSD) processing unit to generate an OSD image, one or more image signal receivers to receive a first image signal and a second image signal from one or more external apparatuses, an image signal processing unit to generate a first image from the first image signal and a second image from the second image signal, to perform masking partially to the first image to set a display portion of the OSD image on the first image, and to perform scaling to the second image to match with the display portion of the OSD image, the second image processed with the scaling to be virtually superimposed on the first image processed with the masking, and an image display unit to sequentially display the first image processed with the masking and the second image processed with the scaling with a display ratio set for the first image and the second image.

As to the above described aspects of the present invention of the image projection apparatus and the image display apparatus, and a picture-in-picture system can be devised while reducing the number of memories and/or memory capacity for use, with which the image projection apparatus and the image display apparatus can be devised with lesser cost.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic configuration of an image projection system of one or more example embodiments of the present invention;
FIG. 2 is a perspective view of an image projection apparatus of one or more example embodiments of the present invention;
FIG. 3 is a side view of the image projection apparatus of FIG. 2, and a projection condition of a projection image on a projection face;
FIG. 4A is a perspective view of the image projection apparatus of FIG. 2, in which an outer cover is removed;
FIG. 4B is an expanded view of an optical engine and a light source unit indicated by a circular line in FIG. 4A.
FIG. 5 is a schematic cross-sectional view of the optical engine and the light source unit of the image projection apparatus of FIG. 2;
FIG. 6A is a functional block diagram of the image projection apparatus of FIG. 2;
FIG. 6B is an example of a hardware configuration of the image projection apparatus of FIG. 2;
FIG. 7A is an example of a primary image setting a display portion used for displaying an OSD image by performing masking to the primary image;
FIG. 7B is an example of a secondary image processed with scaling for projecting the secondary image at the display portion used for displaying the OSD image.
FIG. 8 is an example of a displaying sequence of primary images and secondary images alternately displaying the primary images and secondary images using an image projection unit;
FIG. 9 is a flow chart showing the steps of image projection processing by the image projection apparatus of the first example embodiment;
FIG. 10 is an example of a displaying sequence of the primary images and the secondary images alternately with a given display ratio by using the image projection unit.
FIG. 11 is a flow chart showing the steps of image projection processing by the image projection apparatus of the second example embodiment;
FIG. 12A is an example of a primary image setting a display portion of OSD image at a lower right of a projection image by performing masking, and a secondary image processed with scaling; and
FIG. 12B is an example of a primary image setting a display portion of OSD at a upper left of a projection image by performing masking, and a secondary image processed with scaling.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, an apparatus or system according to an example embodiment is described hereinafter.

### (First example embodiment)

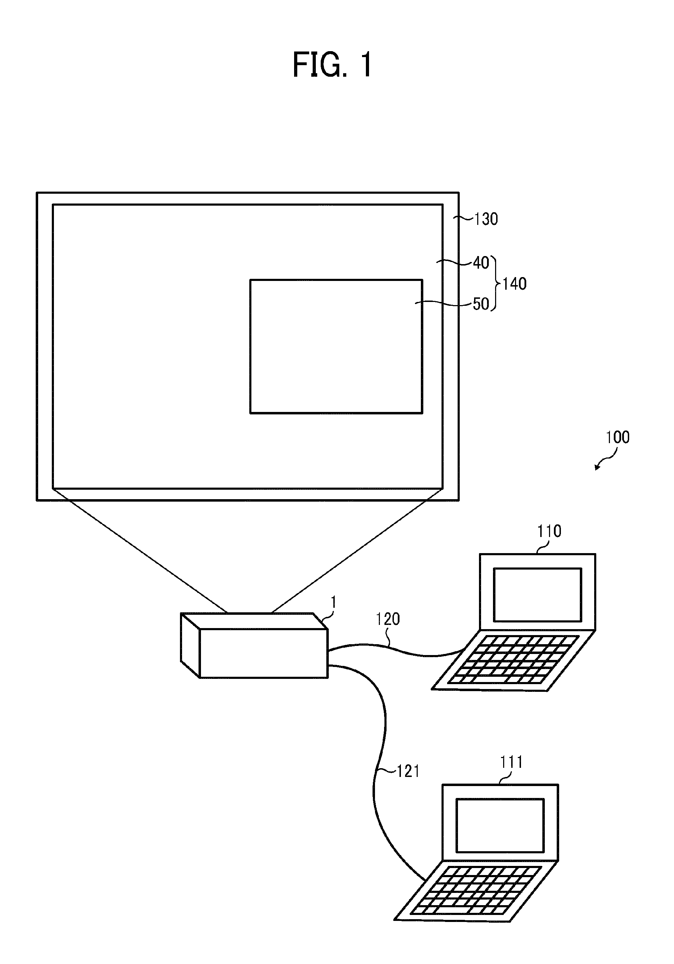

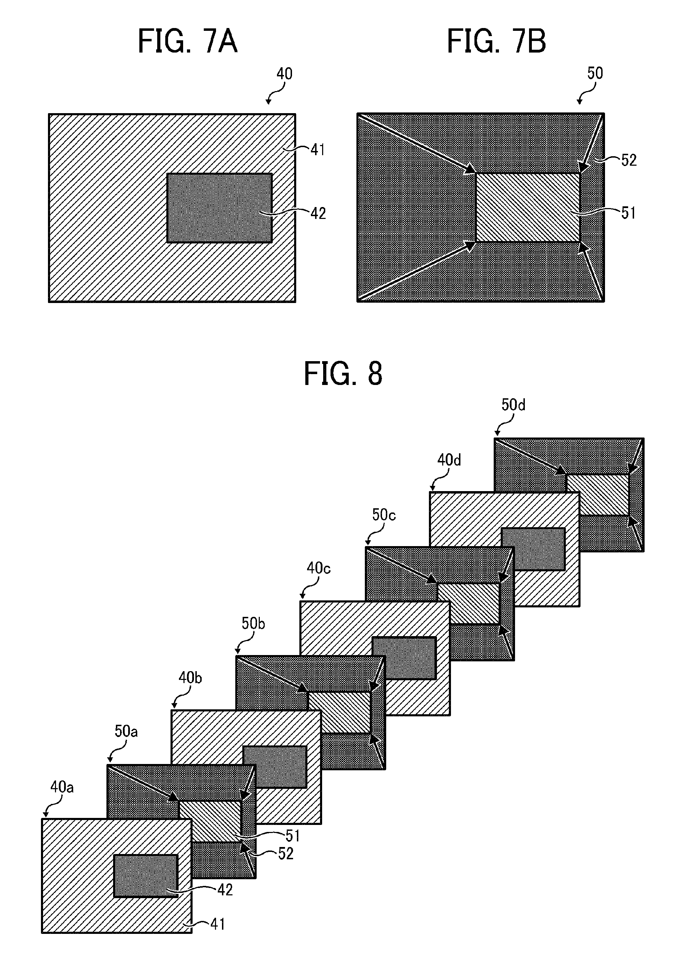

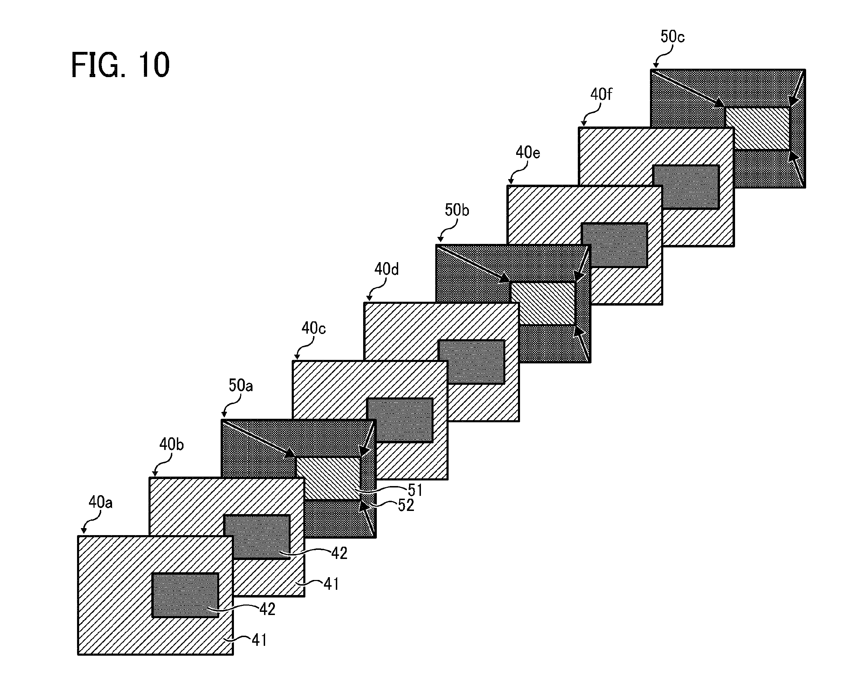

A description is now given of an image projection apparatus 1 of one or more example embodiments of the present invention with reference to FIGs. 1 to 12. The image projection apparatus 1 includes, for example, one or more image signal receivers, an image signal processing unit, an image projection unit, and an on-screen-display (OSD) processing unit. The image signal receiver (e.g., image receiving terminals 30a to 30e) receives a first image signal and a second image signal from one or more external apparatuses (e.g., image supply apparatuses 110 to 114), in which the image receiving terminals 30a to 30e can be used to input the received signals into the image projection apparatus 1. The image signal processing unit (e.g., image signal processing unit 22) generates a first image (e.g., primary image 40 or secondary image 50) based on the first image signal, and generates a second image (e.g., primary image 40 or secondary image 50) based on the second image signal. The image projection unit (e.g., control unit 24, optical projection unit 26) displays the first image and the second image generated by the image signal processing unit. The OSD processing unit (e.g., OSD processing unit 23) generates an on-screen display (OSD) image to be displayed on a projection image by superimposing the OSD image on a projection image. The image signal processing unit performs masking to one of the first image and second image, and scaling to another one of the first image and second image not processed by the masking. For example, the image signal processing unit performs the masking to the first image to set a display portion for displaying the OSD image on a projection image generated from the first image data while setting other area of the projection image as a primary image projecting portion 41 that is not used for displaying the OSD image, wherein the OSD image can be generated and displayed on the projection image by using the OSD processing unit. Further, the image signal processing unit performs the scaling to the second image, not processed by the masking, to generate a secondary image to be displayed at the display portion of the OSD image set on the projection image, wherein the secondary image is referred to a secondary image projecting portion 51. Then, the image projection unit sequentially displays the first image processed with the masking and the second image processed with the scaling with a given display ratio to be described later with reference to FIGs. 8 and 10.

### (Image projection system)

FIG. 1 is a schematic configuration of an image projection system 100 of one or more example embodiments of the present invention. The image projection system 100 includes, for example, an image projection apparatus 1, a first image supply apparatus 110 that supplies a first input signal such as a first image signal, and a second image supply apparatus 111 that supplies a second input signal such as a second image signal. The image projection apparatus 1 can be coupled or connected to other apparatuses such as the first image supply apparatus 110 and the second image supply apparatus 111 via cables120 and 121 respectively.

The image projection apparatus 1 can be used as a projector that generates images such as still image and movie image with or without audio based on image data supplied from the first image supply apparatus 110 and the second image supply apparatus 111, and projects the generated images on a screen 130 used as a projection face.

As illustrated in FIG. 1, the image projection apparatus 1 projects a projection image 140 on the screen 130. The projection image 140 displayed on the screen 130 can include a primary image 40, and a secondary image 50. For example, the primary image 40 is displayed on the screen 130 based on a first input signal supplied from the first image supply apparatus 110, and the secondary image 50 is displayed on the screen 130 based on a second input signal supplied from the second image supply apparatus 111. As illustrated in FIG. 1, the secondary image 50 is displayed at a part of the primary image 40.

The image projection apparatus 1 includes one or more image receiving terminals as an interface to receive an image signal such as High-Definition Multimedia Interface (HDMI: registered trademark) terminal, DisplayPort terminal, Thunderbolt terminal, VGA (Video Graphics Array) input terminal, S-VIDEO terminal, and RCA terminal. In this description, the image projection apparatus 1 includes, for example, a plurality of image receiving terminals. The image projection apparatus 1 can receive image signals from the first image supply apparatus 110 and the second image supply apparatus 111 via the cables 120 and 121 connected to the respective image receiving terminals. The image receiving terminals can be used to receive data and to input the received data into the image projection apparatus 1.

Further, the image projection apparatus 1 can receive image signals from the first image supply apparatus 110 and the second image supply apparatus 111 using wireless communication employing a wireless communication protocol such as Bluetooth (registered trademark) and WiFi (registered trademark).

The first image supply apparatus 110 and the second image supply apparatus 111 can supply images to the image projection apparatus 1 to be projected by the image projection apparatus 1. Each of the first image supply apparatus 110 and the second image supply apparatus 111 has an interface to output image signals from the first image supply apparatus 110 and the second image supply apparatus 111. Each of the first image supply apparatus 110 and the second image supply apparatus 111 transmits image signals for generating display-use images to the image projection apparatus 1 with a given transfer rate such as 30 to 60 frames per second (fps).

Each of the first image supply apparatus 110 and the second image supply apparatus 111 includes one or more image output terminals as an interface to output the image signals such as High-Definition Multimedia Interface (HDMI: registered trademark) terminal, DisplayPort terminal, Thunderbolt terminal, VGA(Video Graphics Array) terminal, S-VIDEO terminal, and RCA terminal. Each of the first image supply apparatus 110 and the second image supply apparatus 111 can transmit image signals to the image projection apparatus 1 via the cables 120 and 121 connected to the image output terminals. Further, each of the first image supply apparatus 110 and the second image supply apparatus 111 can transmit the image signals to the image projection apparatus 1 using wireless communication employing a wireless communication protocol such as Bluetooth (registered trademark) and WiFi (registered trademark).

Each of the first image supply apparatus 110 and the second image supply apparatus 111 can be an information processing apparatus and a replay apparatus that can supply the image signals, in which the information processing apparatus is, for example, a note book personal computer (PC), desktop PC, tablet PC, and personal digital assistance (PDA), and the replay apparatus is, for example, a DVD player, and Blu-ray (registered trademark) player. In a configuration of FIG. 1, two image supply apparatuses 110 and 111 are connected to the image projection apparatus 1, and the primary image 40 and the secondary image 50 are generated from the input signals supplied from different image supply apparatuses, but the input signals can be supplied from the same image supply apparatus.

### (Configuration of image projection apparatus)

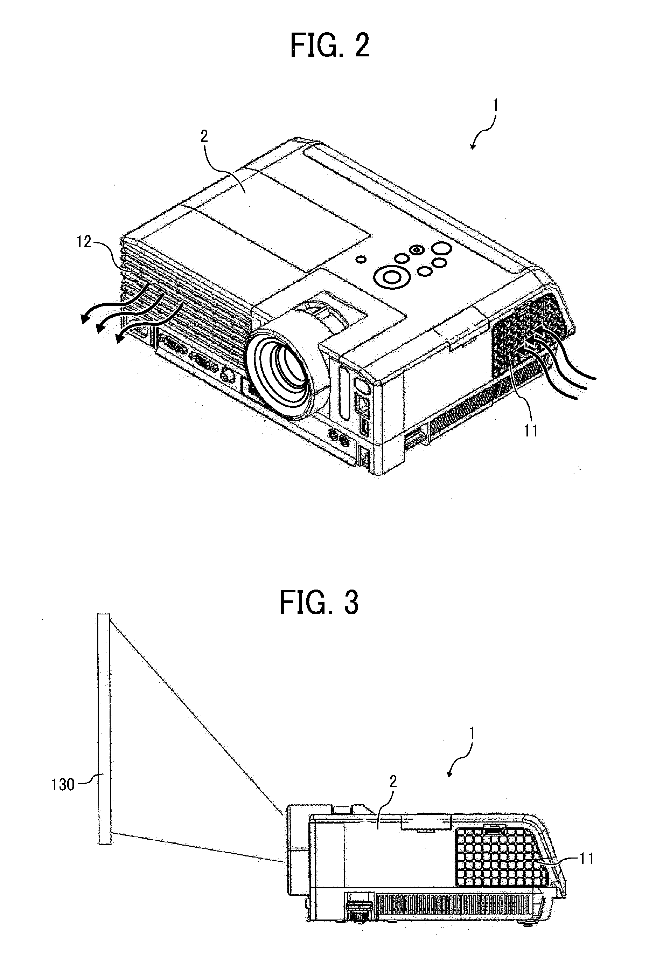

FIG. 2 is a perspective view of the image projection apparatus 1 according to one or more example embodiments, and FIG. 3 is a side view of the image projection apparatus 1, and a projection condition of a projection image on a screen 130 used as the projection face.

The image projection apparatus 1 includes, for example, a light source such as a lamp, and a number of electronic circuits therein. Therefore, temperature inside the image projection apparatus 1 increases when the image projection apparatus 1 is activated. The image projection apparatus 1 includes an air-intake port 11 and an exhaust port 12 so that the temperature inside the image projection apparatus 1 does not exceed heat-resistance temperature of internal components.

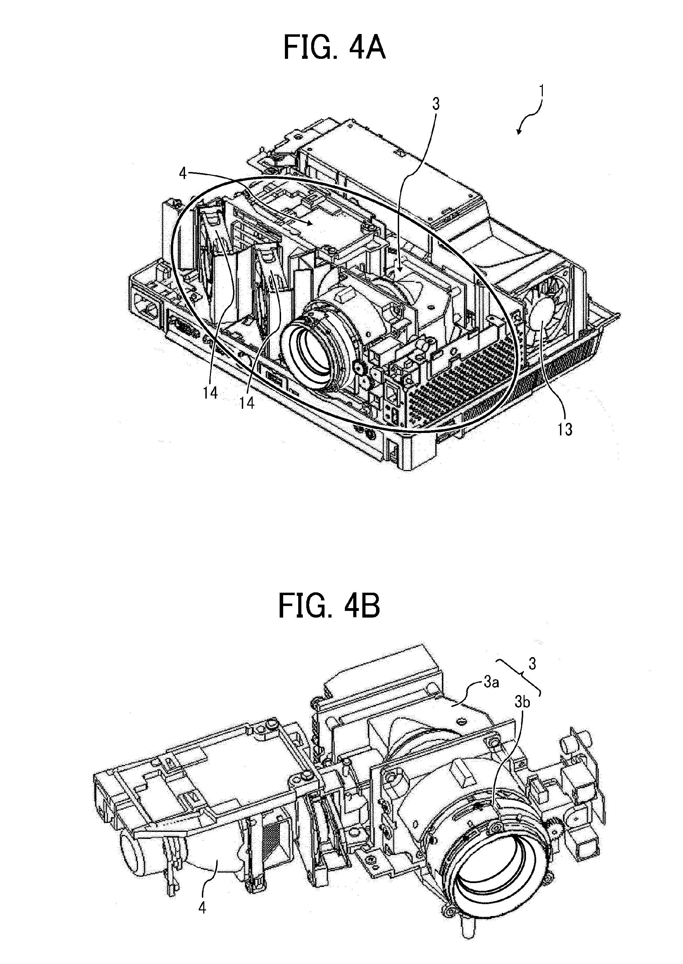

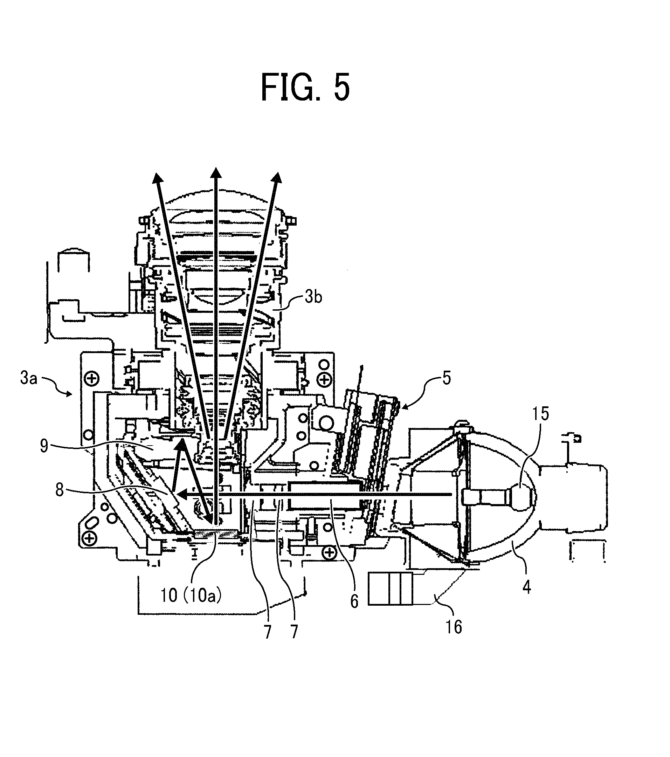

FIG. 4A is a perspective view of the image projection apparatus 1, in which an outer cover 2 is removed to expose internal parts. Further, FIG. 4B is an expanded view of an optical engine 3 and a light source unit 4 indicated by a circular line in FIG. 4A. As illustrated in FIGs. 4A and 4B, the image projection apparatus 1 includes, for example, the optical engine 3 and the light source unit 4. Further, FIG. 5 is a schematic cross-sectional view of the optical engine 3 and the light source unit 4. The optical engine 3 includes a lighting unit 3a used as an optical radiation system, and a projection unit 3b used as an optical projection system.

As illustrated in FIG. 4A, an air-intake fan 13 is disposed inside the air-intake port 11, and an exhaust fan 14 is disposed inside the exhaust port 12. The inside of the image projection apparatus 1 can be cooled by forced air draft, which can be generated by in-taking air from the air intake fan 13 and exhausting the air from the exhaust fan 14.

As to the image projection apparatus 1, light emitted (i.e., white light) from the light source 20 of the light source unit 4 is irradiated to the lighting unit 3a of the optical engine 3. In the lighting unit 3a, the irradiated white light is separated into red, green and blue (RGB) light, and then guided to an image generation element unit 10 by using the optical radiation system including lenses and mirrors. The image generation element unit 10 generates an image based on modulated signals, and then the optical projection system such as the projection unit 3b enlarges and projects the generated image onto the screen 130.

The light source unit 4 includes a light source 15 that can employ various lamps such as an arc lamp (e.g., high pressure mercury lamp, xenon lamp). In this description, the light source 15 employs the high pressure mercury lamp.

Further, a cooling fan 16 is disposed at one side of the light source unit 4 as a cooling device for cooling the light source 15. The rotation speed of the cooling fan 16 is controlled at a given speed level to maintain temperature of each parts of the light source unit 4 within a given temperature range. Further, an exit direction of light from the light source unit 4 and an exit direction of image light from the projection unit 3b are angled about 90-degree directions with each other as illustrated in FIG. 5.

### (Lighting apparatus)

Further, the lighting unit 3a of the optical engine 3 includes, for example, a color wheel 5, a light tunnel 6, a relay lens 7, a flat-face mirror 8, and a concave-face mirror 9. The color wheel 5 separates light emitted from the light source 15. The light tunnel 6 guides the light exiting from the color wheel 5 to the optical radiation system. Further, the lighting unit 3a includes the image generation element unit 10.

In the lighting unit 3a, the white light emitted from the light source 20 is sequentially converted into RGB light for each unit time by the color wheel 5 having a disk shape, and the converted light exits from the color wheel 5. Then, the converted light exiting from the color wheel 5 is guided to the light tunnel 6 having a cylindrical shape composed of glass plates. The light tunnel 6 is used as a light equalizer, in which the light is reflected on an inner face of the light equalizer for a plurality of times to equalize the light.

Then, the light exiting from the light tunnel 6 is condensed by the relay lens 7 composed of two lenses while correcting chromatic aberration on the optical axis. Further, the light exiting from the relay lens 7 is reflected by the flat-face mirror 8 and the concave-face mirror 9, and is irradiated to the image generation element unit 10. The image generation element unit 10 includes, for example, a digital micro-mirror device (DMD) element l0a used as an image generation element (or light modulation element). The DMD element 10a includes a plurality of micro mirrors shaping the mirror face as a rectangular shape. Each of the micro mirrors is time-divisionally driven based on image data, with which the micro mirrors reflect light to generate projection light used for generating a projection image.

Based on input signals, the image generation element unit 10 switches ON/OFF of the plurality of micro mirrors of the DMD element 10a to select light to be output to the projection unit 3b, and sets gradation values. Specifically, based on the time-divisional image data, the DMD element 10a having the plurality of micro mirrors reflects light used for projection (i.e., projection light) to a projection lens, and reflects light not used for projection to an OFF plate. The projection light reflects on the image generation element unit 10 is directed to the projection unit 3b, and then the projection light passing through a plurality of projection lenses in the projection unit 3b is enlarged and projected onto the screen 130.

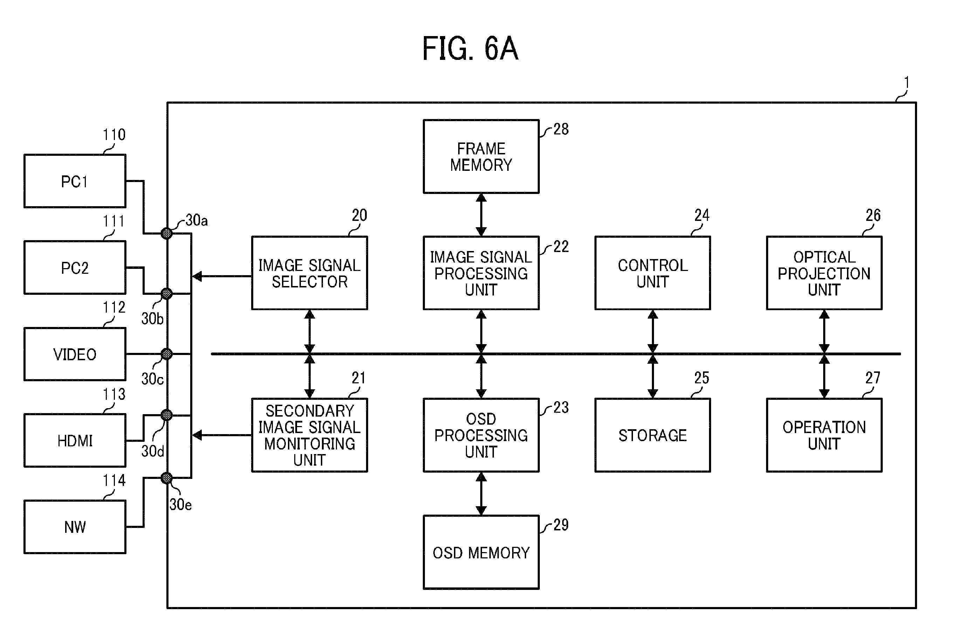

FIG. 6A is a functional block diagram of the image projection apparatus 1. The image projection apparatus 1 includes, for example, an image signal selector 20, a secondary image signal monitoring unit 21, an image signal processing unit 22, an OSD processing unit 23, a control unit 24, a storage 25, an optical projection unit 26, an operation unit 27, a frame memory 28, an OSD memory 29, and image receiving terminals 30a to 30e. For example, the image receiving terminals 30a to 30e can be respectively coupled or connected to image supply apparatuses 110 to 114, wherein each of the image supply apparatuses 110 to 114 is used as an external apparatus as illustrated in FIG. 6A.

The image signal selector 20 can be used to select one image supply apparatus from a plurality of the image supply apparatuses 110 to 114 based on an operation at the operation unit 27 to determine which one of the image supply apparatuses is used to supply a first input signal for generating a first image.

The secondary image signal monitoring unit 21 can be used to monitor a request for receiving a second input signal.

The image signal processing unit 22 receives image signals supplied from the image supply apparatus selected by the image signal selector 20, in which the image signals can be supplied from one of the image supply apparatuses 110 to 114 via the image receiving terminal 30 corresponding to the selected image supply apparatus, and performs various processing such as serial-parallel conversion and voltage level conversion to the received image signals. Further, based on the received image signals, the image signal processing unit 22 generates image data, and stores the generated image data in the frame memory 28. In this description, the primary image 40 is generated based on a first input signal, and the secondary image 50 is generated based on a second input signal, but the primary image 40 can be generated based on the second input signal, and the secondary image 50 can be generated based on the first input signal.

The frame memory 28 stores the image data generated by the image signal processing unit 22. The frame memory 28 is a memory such as a non-volatile semiconductor memory, for example, erasable programmable read-only memory (EPROM), electrically erasable programmable read-only memory (EEPROM), and flash memory.

Further, the image signal processing unit 22 performs masking and scaling to the image data stored in the frame memory 28 to be described later in detail.

The OSD processing unit 23 generates an on-screen display (OSD) image such as a menu image. The OSD processing unit 23 generates an OSD image such as the menu image to be superimposed and displayed on a projection image based on data stored in the OSD memory 29. The menu image can be used for setting various settings such as language setting, display mode setting, image adjustment setting, and power setting, and can be used to request operations desired by a user. Further, a dialogue image, an error reporting image can be displayed as the OSD image by using the OSD capability. The menu image, dialogue image, and error reporting image or the like projectable by the OSD capability are examples of the OSD image.

The OSD memory 29 is a memory to store various information used for generating the OSD image. In the one or more example embodiments, the OSD image can be displayed at a position having given coordinates in the projection image, wherein the coordinates of position used for displaying the OSD image can be pre-set, and stored in the OSD memory 29. The OSD memory 29 employs, for example, a non-volatile semiconductor memory such as erasable programmable read-only memory (EPROM), electrically erasable programmable read-only memory (EEPROM), and flash memory.

The control unit 24 controls the image projection apparatus 1 as a whole. The control unit 24 is connected to each of units such as the image signal selector 20, the secondary image signal monitoring unit 21, the image signal processing unit 22, and the OSD processing unit 23 via a bus, and controls each of the units, and controls signal processing at each of the units. For example, when image data is processed by the image signal processing unit 22, the control unit 24 controls the optical projection unit 26 to project an image on the projection face, in which the control unit 24 can function as the image projection unit.

The storage 25 is a memory that stores various image processing programs, and settings. The control unit 24 performs various processing based on the various image processing programs stored in the storage 25. Further, the image signal processing unit 22 performs processing for the first input signal and the second input signal, which are the image data stored in the frame memory 28, based on the image processing programs and settings stored in the storage 25.

The optical projection unit 26 used an image projection unit can be configured with, for example, the light source unit 4, the lighting unit 3a, the image generation element unit 10, and the projection unit 3b.

The operation unit 27 is used to receive various operations requested by a user. The operation unit 27 is configured with, for example, key buttons (operation keys) disposed on an outer face of the image projection apparatus 1. The operation request includes, for example, a request for switching an image supply apparatus used for projecting the primary image 40 and the secondary image 50 when a plurality of external apparatuses such as the image supply apparatuses 110 to 114 is connected to the image projection apparatus 1, a request of displaying an OSD image such as a menu image, a request of changing the aspect ratio of a projection image, a request of power-OFF of the image projection apparatus 1, and a request of changing light power to change light intensity of the light source 15. Upon receiving these operation requests, the operation unit 27 reports the requested operation request to the control unit 24.

Each of the image receiving terminals 30a to 30e can be used as the image signal receiver that receives the image signals from external apparatuses such as the image supply apparatuses 110 to 114. Since the image receiving terminals 30a to 30e can be used to input the received signals into the image projection apparatus 1, the image receiving terminals 30a to 30e can be also referred to the image input terminals.

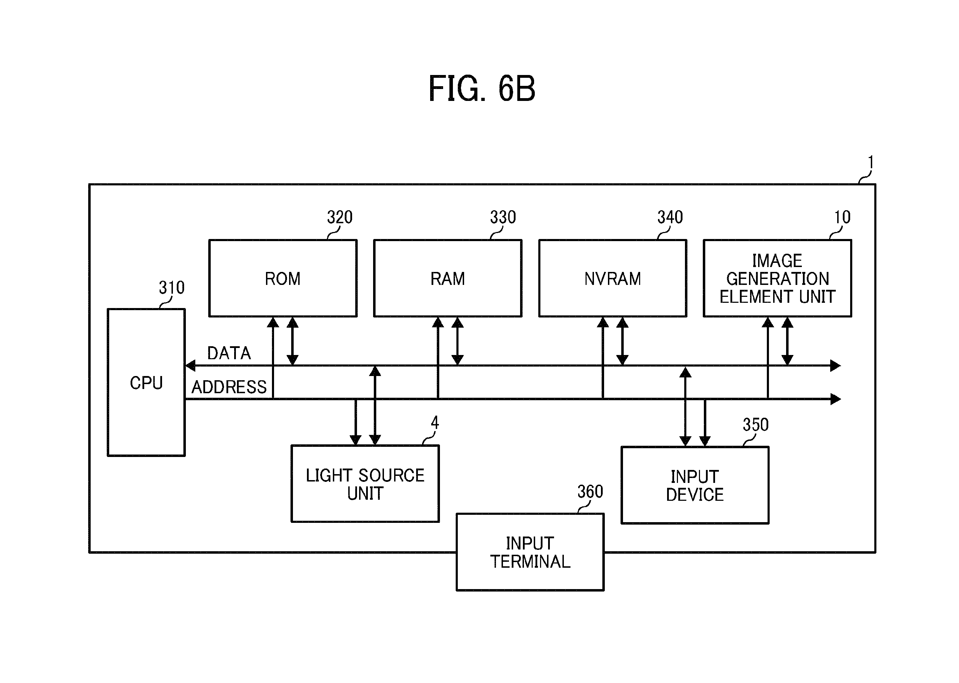

FIG. 6B is an example of a hardware configuration of the image projection apparatus 1. The image projection apparatus 1 includes, for example, a central processing unit (CPU) 310, a read only memory (ROM) 320, a random access memory (RAM) 330, a non-volatile random access memory (NVRAM) 340, an input devise 350, an input terminal 360, the light source unit 4, and the image generation element unit 10. The ROM 320 stores programs executable by the CPU 310. The RAM 330 is used as a working memory when executing the programs. The NVRAM 340 is a non-volatile memory that stores various settings and data of the image projection apparatus 1 such as data of primary image and secondary image generated by the CPU 310, and information of OSD image required for the masking. The computation results of the CPU 310 can be transmitted to the light source unit 4, and the image generation element unit 10 (light modulator) including the DMD element 10a. The input device 350 can be connected to the input terminal 360. The input device 350 can selectively receive signals from the input terminal 360 as the first input signal and second input signal. Each of the functional units of the image projection apparatus 1 can be devised as a hardware or a combination of software and hardware using the programs stored in the ROM 320. Specifically, based on the first input signal and second input signal input from the input terminal 360, the CPU 310 generates the primary image and secondary image by executing the programs stored in the ROM 320, and then the CPU 310 performs the masking and scaling based on the OSD image to virtually display a picture-in-picture (PIP) image to be decriebd later.

To be described later, the image projection apparatus 1 generates the primary image 40 based on a first input signal, and generates the secondary image 50 based on a second input signal. Further, the image projection apparatus 1 performs the masking to the primary image 40 based on coordinates data of a position set for an OSD image stored in the OSD memory 29, in which the masking is performed to set a display portion used for displaying the OSD image on the primary image 40 while not processing other portions of the primary image 40, and performs the scaling to the secondary image 50. The scaling is performed to the secondary image 50 to match the size and position of the secondary image 50 to the display portion used for displaying the OSD image set on the primary image 40 based on the coordinate data of the position set for the OSD image. Further, the image projection apparatus 1 displays a plurality of the primary images 40 as odd number frames, and a plurality of t the secondary images 50 as even number frames alternately.

FIG. 7A is an example of the primary image 40 setting a display portion used for displaying the OSD image by performing the masking to the primary image 40, in which the masking is performed to set the display portion used for displaying the OSD image on the primary image 40. FIG. 7B is an example of the secondary image 50 processed with the scaling for projecting the secondary image at the display portion used for displaying the OSD image.

As illustrated in FIG. 7A, the image signal processing unit 22 performs the masking to the primary image 40 generated from the first input signal. Specifically, the image signal processing unit 22 performs the masking to set the display portion used for displaying the OSD image based on a projection position (i.e., coordinate position) of the OSD image stored in the OSD memory 29. The set display portion is referred to a masking-processed portion 42, in which the masking-processed portion 42 has no image data, which means that image data is muted for the masking-processed portion 42.

Therefore, as illustrated in FIG. 7A, the contents of the primary image 40 to be projected actually becomes a portion indicated by slashed lines excluding the masking-processed portion 42. In FIG. 7A, the portion of slashed lines is referred to a primary image projecting portion 41.

Further, as illustrated in FIG. 7B, the image signal processing unit 22 performs the scaling to the secondary image 50 generated from a second input signal. The scaling is performed to the secondary image 50 to match the size and position of the secondary image 50 to the size and position of the display portion used for displaying the OSD image (i.e., masking-processed portion 42) generated by performing the masking to the primary image 40. Therefore, the secondary image 50 is converted to an image having the size and position matched to the size and position of the masking-processed portion 42, in which an area cut by the scaling (i.e., scaled portion 52) has no image data, which means that image data is muted for the scaled portion 52.

Therefore, as illustrated in FIG. 7B, the contents of the secondary image 50 to be projected actually becomes a portion indicated by slashed lines excluding the scaled portion 52. In FIG. 7B, the portion of slashed lines portion is referred to a secondary image projecting portion 51.

FIG. 8 is an example of a displaying sequence of the primary images 40 and the secondary images 50 alternately displaying the images by using the image projection unit. The image projection unit of the image projection apparatus 1 projects and displays the primary images 40 processed with the masking (i.e., primary image projecting portion 41) described with FIG. 7A, and the secondary images 50 processed with the scaling (i.e., secondary image projecting portion 51) alternately. Therefore, as illustrated in FIG. 8, images can be sequentially and alternately displayed with a sequence of the primary image 40a, secondary image 50a, primary image 40b, secondary image 50b, primary image 40c, secondary image 50c, and so on.

In this example case of FIG. 8, each of the primary images 40 is displayed as an odd number frame, and each of the secondary image 50 is displayed as an even number frame. Since the primary image projecting portion 41 of the primary image 40 is projected actually, and the secondary image projecting portion 51 of the secondary image 50 is projected actually, when a user sees projection images displaying the primary images 40 and the secondary images 50 alternately with a given display ratio, the user can recognize a picture-in-picture image such as the secondary image 50 is displayed on a partial portion of the primary image 40. With this configuration, the image projection apparatus 1 can devise a virtual picture-in-picture system.

A frame rate of the primary images 40 and the secondary images 50 per second can be set to a value that the user can recognize the projection images as picture-in-picture images. The greater the frame rate, the harder to recognize the switching of the primary images 40 and the secondary images 50. Therefore, the greater frame rate is preferably set for projecting the picture-in-picture images. The frame rate can be, for example, 30 fps to 60fps, or more.

Since the masking-processed portion 42 and the scaled portion 52 do not have data, the image generation element unit 10 (DMD element 10a) is set off, and thereby a blank such as black image appears, but not limited hereto. Further, a given brightness (gradation value) can be set for the primary images 40 and the secondary images 50 so that the primary images 40 and the secondary images 50 can be clearly or distinctively recognized one to another without interference of the primary images 40 and the secondary images 50 when the primary images 40 and the secondary images 50 are displayed alternately.

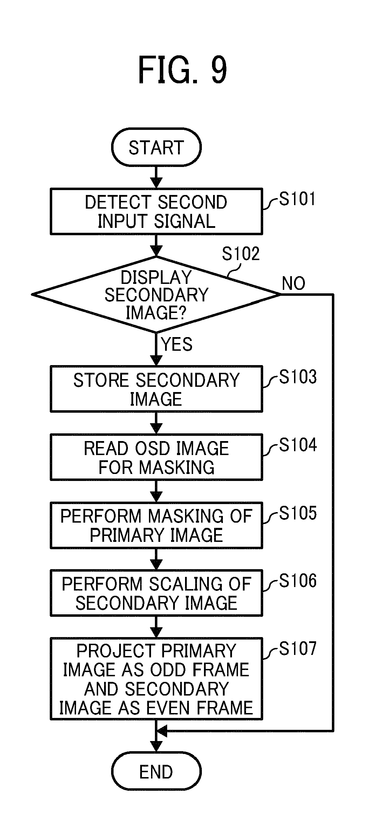

A description is given of image processing and image projection processing performable by the image projection apparatus 1 with reference to FIG. 9. FIG. 9 is a flow chart showing the steps of the image projection processing of the first example embodiment, in which it is assumed that a first input signal is already input, and the primary image 40 is generated from the first input signal and projected.

When the secondary image signal monitoring unit 21 detects a second input signal, which is different from the first input signal (S101), it is determined whether the secondary image 50 to be generated from the second input signal is to be displayed on the primary image 40, which means it is determined whether the picture-in-picture mode is used (S102). This determination can be performed by a user. For example, a panel of the operation unit 27 is displayed with information that the second input signal is input, and then the user can select whether the picture-in-picture mode is used.

If it is determined that the secondary image 50 is to be displayed as a picture-in-picture image (S102: YES), the image signal processing unit 22 stores image data generated from the second input signal in the frame memory 28 (S103).

Then, the image signal processing unit 22 reads an OSD image having a pre-set size and position from the OSD memory 29 (S104), and the image signal processing unit 22 performs the masking to the primary image 40 stored in the frame memory 28 (S105). Further, the image signal processing unit 22 performs the scaling to the secondary image 50 based on the size and position of the OSD image read from the OSD memory 29 (S106).

Then, the control unit 24 instructs the optical projection unit 26 to project the primary images 40 processed with the masking as the odd number frames, and the secondary images 50 processed with the scaling as the even number frames (S107).

The image signal processing unit 22 generates the primary image 40 from the first input signal, and the secondary image 50 from the second input signal, but not limited hereto. For example, the image signal processing unit 22 can generate the primary image 40 from the second input signal, and the secondary image 50 from the first input signal.

The above described image projection apparatus 1 generates the primary image 40 from the first input signal, and the secondary image 50 from the second input signal, and projects and displays the primary images 40 and the secondary images 50 respectively as the odd number frames, and the even number frames with a given display ratio.

If the primary image 40 and the secondary image 50 are displayed by just overlapping the primary image 40 and the secondary image 50, the primary image 40 and the secondary image 50 are displayed with the overlapped condition. Therefore, the masking is performed to the primary image 40 based on the OSD image having a given size, and the scaling is performed to the secondary image 50 based on the OSD image having the given size used for the masking the primary image 40.

With this configuration, the secondary images 50 can be continuously displayed with the primary images 40, in which virtual picture-in- picture (PIP) images can be displayed. Therefore, the above described configuration of the first example embodiment does not require conventional processing such as generating a synthesis image by performing the sub-sampling and storing the synthesis image in a memory temporally. Therefore, the above described configuration of the first example embodiment can reduce the required memory capacity, and further, since the above described configuration of the first example embodiment can reduce processing load, the processing can be performed with higher speed. Therefore, the above described image projection apparatus 1 can be configured with lesser cost.

### (Second example embodiment)

A description is given of a second example embodiment of the image projection apparatus 1. Since the second example embodiment uses some same parts used for the first example embodiment, the same parts are not described.

In the first example embodiment, the primary images 40 and the secondary images 50 are displayed alternately with a display ratio of "1:1", but the projection sequence and projection ratio of the primary images 40 and the secondary images 50 is not limited hereto.

Specifically, the display pattern of the primary image 40 and the secondary image 50 can be changed by setting different brightness for the primary image 40 and the secondary image 50, in which one of the primary image 40 and the secondary image 50 to be displayed with a higher priority is displayed brighter than another one of the primary image 40 and the secondary image 50. For example, when the display ratio of the primary image 40 is set A, and the display ratio of the secondary image 50 is set B, the display ratio "A: B" can be set "n : 1" and "n : m (n > m)" to display the primary image 40 with a higher priority. Further, the display ratio "B : A" can be set "n : 1" and "n : m (n > m)" to display the secondary image 50 with a higher priority. The "n" and "m" can be set any numbers.

FIG. 10 is an example of a displaying sequence of the primary images 40 and the secondary images 50 alternately displaying images with a given display ratio by using the image projection unit.

In an example case of FIG. 10, six frames of nine frames are displayed as the primary images 40a to 40f, and three frames of nine frames are displayed as the secondary images 50a to 50c. Therefore, the primary images 40 and the secondary images 50 are displayed with the display ratio of "2 : 1" to display the primary image 40 with a higher priority, in which brightness of the secondary image 50 displayed on the primary image 40 can be set darker to set brightness of the primary image 40 prominently.

Further, if the secondary image 50 and the primary image 40 are displayed with the display ratio of "2 : 1" opposite to the example of FIG. 10, brightness of the primary image 40 can be set darker to display the secondary image 50 with a higher priority, with which the secondary image 50 can be displayed prominently.

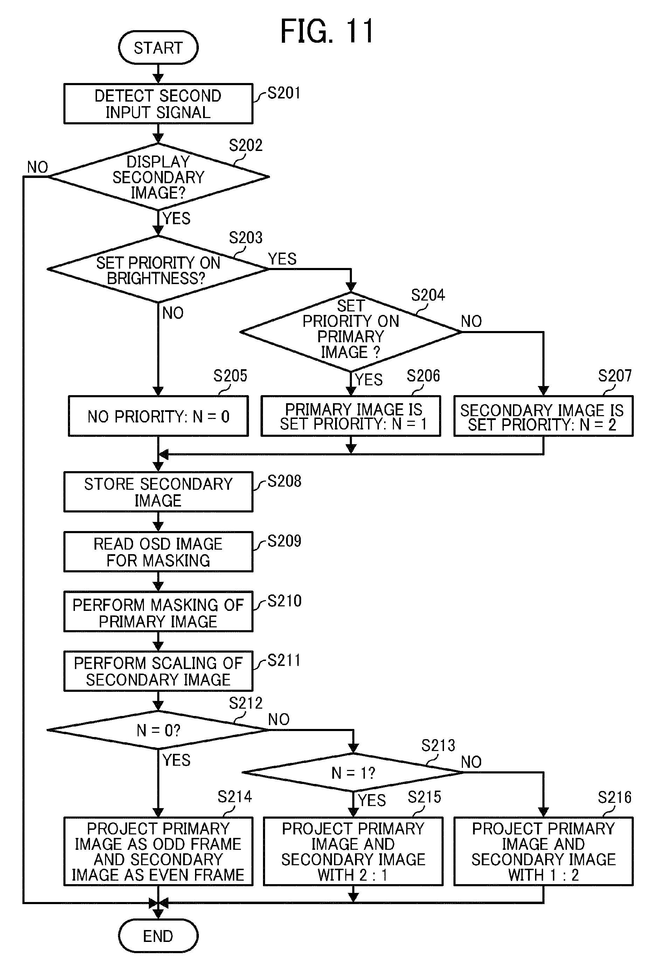

A description is given of image processing and image projection processing performable by the image projection apparatus 1 of the second example embodiment with reference to FIG. 11. FIG. 11 is a flow chart showing the steps of image projection processing of the second example embodiment, in which it is assumed that a first input signal is already input, and the primary image 40 is generated from the first input signal, and projected.

When the secondary image signal monitoring unit 21 detects a second input signal, which is different from the first input signal (S201), it is determined whether the secondary image 50 to be generated from the second input signal is to be displayed on the primary image 40, which means it is determined whether the picture-in-picture mode is used (S202).

Then, it is determined whether the brightness priority is set for highlighting any one of the primary image 40 and the secondary image 50 (S203). This highlighting determination can be performed by a user. For example, a panel of the operation unit 27 is displayed with information that the second input signal is input, and then the user can select whether the brightness priority is set.

Further, if the brightness priority is set (S203: YES), it is determined whether the primary image 40 is set with the priority (S204) based on a selection by the user. The brightness priority is indicated by "N" in this description. When the brightness priority is not set (S203: NO), N = 0 is set (S205). Further, if the brightness priority is set, and the primary image 40 is set with the higher priority (S204: YES), N = 1 is set (S206). Further, if the brightness priority is set, and the secondary image 50 is set with the higher priority (S204: NO), N = 2 is set (S207). The brightness priority "N" can be stored, for example, in the storage 25. Further, the set brightness priority "N "can be stored as a pre-set value.

After setting the brightness priority "N", the image signal processing unit 22 stores image data generated from the second input signal in the frame memory 28 (S208).

Then, the image signal processing unit 22 reads an OSD image having a given size and position from the OSD memory 29 (S209), and the image signal processing unit 22 performs the masking to the primary image 40 stored in the frame memory 28 (S210). Further, the image signal processing unit 22 performs the scaling to the secondary image 50 based on the size and position of the OSD image read from the OSD memory 29 (S211).

Then, the set value of brightness priority "N" is determined at steps S212 to S213. If N = 0 (S212: YES), as same as the first example embodiment, the control unit 24 instructs the optical projection unit 26 to project the primary images 40 processed with the masking, and the secondary image s50 processed with the scaling respectively as the odd number frames, and the even number frames (S214) as illustrated in FIG. 8.

If N = 1 (S213: YES), the control unit 24 instructs the optical projection unit 26 to project the primary images 40 processed with the masking, and the secondary images 50 processed with the scaling with a display ratio of "2 : 1" by highlighting the primary images 40 (S215) as illustrated in FIG. 10.

If N = 1 is not set (S213: NO), the control unit 24 instructs the optical projection unit 26 to project the primary images 40 processed with the masking, and the secondary images 50 processed with the scaling with a display ratio of "1 : 2" by highlighting the secondary images 50 (S216).

As to the second example embodiment, the image signal processing unit 22 generates the primary image 40 from the first input signal, and the secondary image 50 from the second input signal, but not limited hereto. For example, the image signal processing unit 22 can generate the primary image 40 from the second input signal, and the secondary image 50 from the first input signal.

Specifically, as to the image projection apparatus 1 of the second example embodiment, the number of frames of the primary image 40 and the number of frames of the secondary image 50 can be displayed with a desired display pattern, in which the number of frames of the primary image 40 and the number of frames of the secondary image 50 can be changed as required. With this configuration, the brightness of the primary image 40 and the brightness of the secondary image 50 can be set differently, in which one of the primary image 40 and the secondary image 50 to be displayed with a higher priority can be displayed brighter than another one of the primary image 40 and the secondary image 50.

### (Third example embodiment)

As to the first and second example embodiments, the OSD image is displayed at a pre-set coordinate position on the projection image. As to the third example embodiment, the OSD processing unit 23 can generate an OSD image using a plurality of display patterns having different sizes and positions (i.e., different coordinate positions) set for displaying the OSD image.

As to the third example embodiment, the plurality of display patterns having different sizes and positions set for the OSD image can be stored in the OSD memory 29. The desired display size and position of the secondary image 50 can be selected from the plurality of display patterns having different sizes and positions. The selection can be instructed from the operation unit 27.

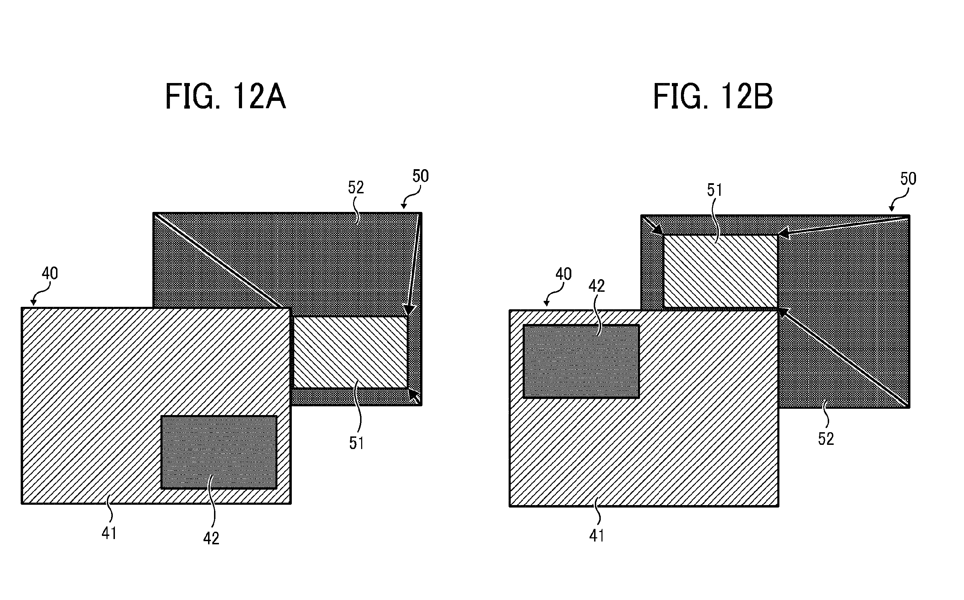

FIG. 12A is an example of the primary image 40 setting a display portion of OSD image at a lower right of a projection image by performing the masking, and the secondary image 50 processed with the scaling, and FIG. 12B is an example of the primary image 40 setting a display portion of OSD at a upper left of a projection image by performing the masking, and the secondary image 50 processed with the scaling.

In the third example embodiment, the display portion of OSD image can be selected from the plurality of display patterns set for the OSD image, with which a virtual picture-in-picture system can display images by using the plurality of display patterns having a greater number of display patterns.

In the above described first to third example embodiments, the image projection apparatus 1 is a digital light processing (DLP) projector but not limited hereto, but the image projection apparatus 1 can be a liquid crystal display (LCD) projector, and a liquid crystal on silicon (LCOS) projector.

Further, the image signal processing unit 22 and the OSD processing unit 23 of the image projection apparatus 1 can be implemented by executing software program such as control program by a CPU of the control unit 24.

As to the above described one or more example embodiments of the image projection apparatus, the picture-in-picture can be devised while reducing the number of memories and/or memory capacity for use, with which the image projection apparatus can be devised with lesser cost. Further, the above described configurations and methods of the image projection apparatuses can be also applied to image display apparatuses such as a computer having a monitor screen, and television monitors with the same effect, in which the image projection unit can be applied as an image display unit.

The present invention can be implemented in any convenient form, for example using dedicated hardware platform, or a mixture of dedicated hardware platform and software. Each of the functions of the described embodiments may be implemented by one or more processing circuits or circuitry. Processing circuitry includes a programmed processor, as a processor includes circuitry. A processing circuit also includes devices such as an application specific integrated circuit (ASIC) and conventional circuit components arranged to perform the recited functions. For example, in some embodiments, any one of the information processing apparatus may include a plurality of computing devices, e.g., a server cluster, that are configured to communicate with each other over any type of communication links, including a network, a shared memory, etc. to collectively perform the processes disclosed herein.

The computer software can be provided to the programmable device using any storage medium or carrier medium such as non-volatile memory for storing processor-readable code such as a floppy disk, a flexible disk, a compact disk read only memory (CD-ROM), a compact disk rewritable (CD-RW), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic tape, a hard disk in a server, a flash memory, Blu-ray disc (registered trademark), secure digital (SD) card, a solid state memory device or the like, but not limited these. Further, the computer software can be provided through communication lines such as electrical communication line. Further, the computer software can be provided in a read only memory (ROM) disposed for the computer. The computer software stored in the storage medium can be installed to the computer and executed to implement the above described processing. The computer software stored in the storage medium of an external apparatus can be downloaded and installed to the computer via a network to implement the above described processing.

The hardware platform includes any desired kind of hardware resources including, for example, a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C, C++, C#, Java (registered trademark), JavaScript (registered trademark), Perl, Ruby, or legacy programming languages such as machine language, assembler language to control functional units used for the apparatus or system. For example, a particular computer (e.g., personal computer, workstation) may control an information processing apparatus or an image processing apparatus such as image forming apparatus, image projection apparatus, and image display apparatus using a computer-readable program, which can execute the above-described processes or steps. In the above-described embodiments, at least one or more of the units of apparatus can be implemented as hardware or as a combination of hardware/software combination. Each of the functions of the described embodiments may be implemented by one or more processing circuits. A processing circuit includes a programmed processor, as a processor includes circuitry. A processing circuit also includes devices such as an application specific integrated circuit (ASIC) and conventional circuit components arranged to perform the recited functions.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. An image projection apparatus (1) comprising:
an on-screen display (OSD) processing unit (23) to generate an OSD image;
one or more image signal receivers (30a-30e) to receive a first image signal and a second image signal from one or more external apparatuses;
an image signal processing unit (22)
to generate a first image from the first image signal and a second image from the second image signal,
to perform masking partially to the first image to set a display portion of the OSD image on the first image, and
to perform scaling to the second image to match with the display portion of the OSD image, the second image processed with the scaling to be virtually superimposed on the first image processed with the masking, and;
an image projection unit (26) to sequentially display the first image processed with the masking and the second image processed with the scaling with a display ratio set for the first image and the second image.

2. The image projection apparatus (1) of claim 1, wherein the image projection unit (26) displays the first image processed with the masking and the second image processed with the scaling alternately.

3. The image projection apparatus (1) of claim 1, wherein when the display ratio of the first image processed with the masking and the second image processed with the scaling is set "A: B,"
the image projection unit (26) displays the first image and the second image with the display ratio of "A : B = n : 1," wherein "n" is a natural number of two or more, or
the image projection unit (26) displays the first image and the second image with the display ratio of "A : B = 1 : n," wherein "n" is a natural number of two or more.

4. The image projection apparatus (1) of any one of claims 1 to 3, wherein the first image processed with the masking is used as a primary image (40), and the second image processed with the scaling is used as a secondary image (50).

5. The image projection apparatus (1) of any one of claims 1 to 4,
wherein the OSD processing unit (23) stores a plurality of display patterns defined with a plurality of sizes and positions settable to the display portion of the OSD image,
wherein the image signal processing unit (22) performs the masking and the scaling based on a display pattern selected from the plurality of display patterns.

6. A method of projecting an image comprising the steps of:
generating an on-screen display (OSD) image;
generating a first image from a first image signal and a second image from a second image signal;
performing masking partially to the first image to set a display portion of the OSD image on the first image;
performing scaling to the second image to match with the display portion of the OSD image, the second image processed with the scaling to be virtually superimposed on the first image processed with the masking; and
displaying the first image processed with the masking and the second image processed with the scaling sequentially with a display ratio set for the first image and the second image.

7. An image display apparatus (1) comprising:
an on-screen display (OSD) processing unit (23) to generate an OSD image;
one or more image signal receivers (30a-30e) to receive a first image signal and a second image signal from one or more external apparatuses;
an image signal processing unit (22)
to generate a first image from the first image signal and a second image from the second image signal,
to perform masking partially to the first image to set a display portion of the OSD image on the first image, and
to perform scaling to the second image to match with the display portion of the OSD image, the second image processed with the scaling to be virtually superimposed on the first image processed with the masking, and;
an image display unit (26) to sequentially display the first image processed with the masking and the second image processed with the scaling with a display ratio set for the first image and the second image.
